# EUROPÄISCHE PATENTSCHRIFT

(11) **EP 4 344 909 B1**
(45) Veröffentlichungstag und Bekanntmachung des Hinweises auf die Patenterteilung: **24.07.2024**
(21) Anmeldenummer: 22198879.3
(22) Anmeldetag: 29.09.2022
(51) Int. Cl.: B60G 21/05

(54) **VERBUNDLENKERACHSE MIT VERSTÄRKUNGSBLECH UND KRAGENDURCHZUG**
TORSION BEAM AXLE WITH REINFORCEMENT PLATE AND COLLAR PASSAGE
ESSIEU À TRAVERSE DÉFORMABLE AVEC TÔLE DE RENFORCEMENT ET PASSAGE DE COLLERETTE

(43) Veröffentlichungstag der Anmeldung: 03.04.2024
(73) Patentinhaber: Benteler Automobiltechnik GmbH, 33102 Paderborn (DE)
(72) Erfinder: Sander, Jens, D-33106 Paderborn (DE); Schomberg, Dennis, D-33813 Oerlinghausen (DE); Schultz, Erik, D-33102 Paderborn (DE)
(74) Vertreter: Osterhoff, Utz

(56) Entgegenhaltungen:
- WO-A1-2015/186700
- WO-A1-2018/013989
- DE-A1- 102009 024 831
- JP-A- S62 178 408

## Beschreibung

Die vorliegende Erfindung betrifft eine Verbundlenkerachse für ein Kraftfahrzeug gemäß den Merkmalen im Oberbegriff von Anspruch 1.

Die vorliegende Erfindung betrifft weiterhin ein Verfahren gemäß den Merkmalen im Patentanspruch 12.

Aus dem Stand der Technik sind Verbundlenkerachsen an Kraftfahrzeugen bekannt. Zumeist werden diese Verbundlenkerachsen an der Hinterachse eines Kraftfahrzeuges eingesetzt. Eine Verbundlenkerachse ist derart aufgebaut, dass diese ein sich in Kraftfahrzeugquerrichtung orientiert erstreckendes Torsionsprofil bzw. Torsionsrohr aufweist. An den Enden des Torsionsrohres sind Längsschwingen, auch Arme genannt, angeordnet. Die Arme selbst sind in Kraftfahrzeuglängsrichtung orientiert. Am Ende eines jeweiligen Armes ist dann eine Radnabe zur Aufnahme eines Rades vorgesehen. Zum Ein- oder Ausfedern des Rades wird das Ende des Armes nach oben bzw. unten, bezogen auf die Kraftfahrzeugvertikalrichtung bewegt. Dabei tordiert das Torsionsrohr um seine Längsachse.

Aus dem Stand der Technik ist es daher weiterhin bekannt, im Bereich der Anbindung von Längsschwinge an das Torsionsrohr Verstärkungsbleche einzusetzen. Solch eine Anordnung ist beispielsweise aus der DE 10 2012 104 999 B4 oder auch aus der DE 10 2014 100 618 B3 bekannt.

Ferner ist aus der WO 2018/013 989 A1 eine Längsschwinge an einem Torsionsrohr bekannt. Die Verstärkungsbleche sind dabei mit dem Torsionsrohr verschraubt. Die Druckschrift kann als nächstliegender Stand der Technik gelten.

Weiterhin ist aus der DE 10 2009 024 831 A1 eine Verbundlenkerachse bekannt, bei welcher ein Verstärkungsblech in Torsionsrohr eingesetzt ist.

Aufgabe der vorliegenden Erfindung ist es, die Anbindung des Verstärkungsbleches an das Torsionsrohr zu verbessern, gleichzeitig das Herstellungsverfahren zu vereinfachen und insbesondere die Korrosionsbeständigkeit im Fügebereich zu verbessern.

Die zuvor genannte Aufgabe wird erfindungsgemäß mit einer Verbundlenkerachse mit den Merkmalen im Anspruch 1 gelöst.

Ein verfahrenstechnischer Teil wird weiterhin mit einem Verfahren gemäß den Merkmalen im Anspruch 12 gelöst.

Die Verbundlenkerachse für ein Kraftfahrzeug weist ein Torsionsrohr sowie an den Enden des Torsionsrohres gekoppelte Längsschwingen auf. Die Längsschwingen und das Torsionsrohr sind aus Stahlwerkstoff hergestellt. Die Längsschwingen sind an den Enden des Torsionsrohres verschweißt.

Das Torsionsrohr selbst ist in seinem Querschnitt zumindest abschnittsweise insbesondere vollständig als halboffenes Profil ausgebildet. Insbesondere ist das Torsionsrohr in seinem Querschnitt als U-förmiges bzw. V-förmiges Profil ausgebildet. Das Torsionsrohr kann auch als Ω-förmges bzw. hutförmiges Profil im Querschnitt ausgebildet sein.

In das Torsionsrohr ist mindestens ein Verstärkungsblech eingesetzt. Bevorzugt ist an beiden Enden des Torsionsrohres jeweils ein Verstärkungsblech eingesetzt. Das Verstärkungsblech ist mit dem Torsionsrohr gekoppelt. Diese Kopplung erfolgt insbesondere, zumindest abschnittsweise durch ein stoffschlüssiges Fügeverfahren, insbesondere ein Schweißvorgang.

Erfindungsgemäß ist nunmehr ein zur Mitte hin orientiertes Ende des Verstärkungsbleches mit dem Torsionsrohr gekoppelt. Diese Koppelung erfolgt erfindungsgemäß durch Herstellung eines Kragendurchzuges. Der Kragendurchzug ist dabei von der Wandung des Torsionsrohrs aus, in einen Innenraum des offenen Hohlprofils des Torsionsrohrs ragend als Kragen ausgebildet. Das Verstärkungsblech weist eine Ausnehmung auf, die von dem Kragen durchgriffen ist. In einer bevorzugten Ausgestaltungsvariante kann auch das Verstärkungsblech selbst einen Kragen aufweisen. Beide Kragen des Kragendurchzuges sind dann aneinander anliegend. Hierdurch wird eine formschlüssige Kopplung hergestellt. Die formschlüssige Kopplung hat den Vorteil, dass diese einfach und kosteneffizient in der Großserienfertigung mit hoher Genauigkeit hergestellt werden kann.

Der Kragen selbst ist innen hohl ausgebildet. Dies bietet den Vorteil, dass unabhängig von der Wandstärke mit geringen Umformkräften der Kragen hergestellt werden kann. Dies gilt insbesondere als Vorteil zum Clinchen, da hier kein Material in der Mitte einer Verprägung bzw. einer Clinch-Verbindung verbleiben würde. Gleichzeitig ergibt sich hierdurch auch ein Vorteil hinsichtlich Korrosionsschutz. Bei einer Verclinchung bzw. einer Verprägung wäre das Material in diesem Bereich doppellagig ausgebildet. Ein KTL-Beschichtungsverfahren oder ein ähnliches Korrosionsschutzverfahren kann hier nicht vermeiden, dass zwischen den Doppellagen Korrosion entsteht, die sich dann von diesem Bereich her ausbreitet.

In Draufsicht kann der Kragen selbst bevorzugt rund ausgebildet sein. Der Kragen kann aber auch als Langloch bzw. mehreckig ausgebildet sein, beispielsweise 6eckig, 8eckig mit abgerundeten Ecken, symmetrisch oder asymmetrisch.

Das Verstärkungsblech verjüngt sich insbesondere zur Mitte des Torsionsprofils hin. Der erfindungsgemäße Kragendurchzug ist im zur Mitte hin orientierten Endbereich des Verstärkungsbleches angeordnet. Das Verstärkungsblech liegt hierzu insbesondere an einer Innenmantelfläche bzw. einem Talgrund bzw. Nutgrund des Torsionsprofils abschnittsweise flächig an, insbesondere im Bereich des Kragendurchzuges bzw. den den Kragen umrandenden Bereich vollflächig an. Die so hergestellte Verbindung ist insbesondere zur Aufnahme von Schubkräften, mithin Kräften, die in der Ebene des Verstärkungsbleches anliegen, geeignet.

In einer weiteren besonders bevorzugten Ausgestaltung ist die Verbindung des Kragendurchzuges derart hergestellt, dass der Kragen das Verstärkungsblech durchgreifend, hergestellt wird. Eine Ausnehmung des Verstärkungsbleches wird bei Herstellung des Kragens bevorzugt aufgeweitet, so dass sich zu dem formschlüssigen Sitz ein kraftschlüssiger bzw. reibschlüssiger Sitz mit ausbildet. Insbesondere ist hierzu zunächst die Ausnehmung zur Herstellung des Kragens mit einem kleineren Durchmesser ausgebildet als die Ausnehmung des Verstärkungsbleches. Die Ausnehmung des Verstärkungsbleches ist besonders bevorzugt um ca. 5 %, insbesondere 10 % aufgeweitet, sodass sich ein Presssitz aufgrund des Kragens ergibt.

Besonders bevorzugt ist die Wandstärke des Torsionsprofils mindestens 1,5mal bevorzugt mehr als 1,8mal insbesondere mehr als 2mal so groß in Relation zu der Wandstärke des Verstärkungsbleches. Die Wandstärke entspricht dann auch der Wandstärke des hergestellten Kragendurchzuges. Auch bei Biegewechselbeanspruchungen bzw. Dauerschwingungen, wie sie im Betrieb des Kraftfahrzeuges an dem Torsionsrohr auftreten, kann somit sichergestellt werden, dass sowohl der formschlüssige als auch der kraftschlüssige Sitz dauerhaft durch Herstellung eines Umformverfahrens eingehalten bleibt.

Bevorzugt sind somit sowohl Torsionsrohr als auch Verstärkungsblech jeweils mit Vorlöchern versehen zur Herstellung des Kragens. Das Vorloch des Torsionsprofils beträgt bevorzugt 10 mm bis 30 mm, insbesondere 12 mm bis 22 mm. Das Vorloch in dem Verstärkungsblech beträgt bevorzugt 15 mm bis 40 mm, insbesondere 20 mm bis 35 mm.

Die Wandstärke des Torsionsprofils weist besonders bevorzugt 3 mm bis 10 mm, insbesondere 3 mm bis 9 mm, ganz besonders bevorzugt 3 mm bis 8 mm, insbesondere 3 mm bis 7 mm und besonders bevorzugt 3, 5 mm bis 6,5 mm auf. Die Wandstärke des Verstärkungsblechs weist besonders bevorzugt 1 mm bis 4 mm, insbesondere 1,5 mm bis 3,5 mm auf.

Besonders bevorzugt ergibt sich ein Größenverhältnis der Vorlochdurchmesser von 1,2 bis 4, insbesondere 1,2 bis 3, besonders bevorzugt 1,2 bis 2 und ganz besonders bevorzugt 1,4 bis 2. Dies bedeutet, dass Vorloch des Verstärkungsbleches ist 1,2 bis 4mal größer als Vorloch des Torsionsprofils.

Die Streckgrenze RP 0,2 des Torsionsprofils beträgt besonders bevorzugt 400 MPa bis 700 MPa, insbesondere 450 MPa bis 650 MPa. Die Streckgrenze des Verstärkungsbleches beträgt bevorzugt 300 MPa bis 600 MPa, insbesondere 300 MPa bis 500 MPa.

Das Verstärkungsblech ist an seinen Seiten, insbesondere an der Innenmantelfläche des Torsionsprofils verschweißt. Ein außenseitiges Ende bezogen auf die Kraftfahrzeugquerrichtung des Verstärkungsbleches ist abschnittsweise an der Längsschwinge verschweißt. In einer weiteren bevorzugten Ausgestaltungsvariante kann die Rückseite des durchgezogenen Kragens selbst verprägt sein. Dies kommt dann einem Nietvorgang gleich, wobei kein separater Niet verwendet wird. In einer weiteren bevorzugten Ausgestaltungsvariante hat es sich erfindungsgemäß gezeigt, dass bereits ein Durchgreifen des hergestellten Kragendurchzuges durch die Ausnehmung des Verstärkungsbleches durchgreifendausreichend ist, um die auftretenden Schubkräfte aufzunehmen. Hierzu liegt der Kragen bevorzugt an mindestens 50 % der Höhe bzw. Wandstärke der Ausnehmung des Verstärkungsbleches an.

In einer weiteren bevorzugten Ausgestaltungsvariante sieht das erfindungsgemäße Verfahren folgende Schritte vor:
- Bereitstellen eines Torsionsrohres mit einer Ausnehmung im Bereich des herzustellenden Kragens
- Einsetzen eines Verstärkungsbleches und Herstellen eines Kragendurchzuges durch die Ausnehmung, wobei der Kragen das Verstärkungsblech mit durchgreift und optional an dem Verstärkungsblech ein Kragen mit ausgebildet wird, wobei der Kragen des Torsionsprofils eine Ausnehmung des Verstärkungsbleches aufweitet, dergestalt, dass eine reibschlüssige Verbindung hergestellt wird.

Das Verstärkungsblech und auch das Torsionsprofil sind bevorzugt mit Ausnehmungen vorgefertigt. Die Ausnehmung des Torsionsprofils ist bevorzugt mit einem kleineren Durchmesser ausgebildet als die Ausnehmung des Verstärkungsbleches. Somit kann der Kragen an dem Torsionsprofil die Ausnehmung des Verstärkungsbleches durchgreifen.

Es hat sich besonders bevorzugt erfindungsgemäß herausgestellt, wenn bereits der Kragen zumindest abschnittsweise vorgeformt ist. Das Verstärkungsblech kann somit an dem Kragen als Zentrierhilfe eingelegt werden. Optional kann dann zunächst das Verstärkungsblech verschweißt werden. Im Anschluss wird der Kragen dann durch vollständiges Durchziehen hergestellt. Der Kragen kann jedoch auch danach hergestellt werden.

Durch das formschlüssige sowie optional kraftschlüssige Kopplungsverfahren am Kragendurchzug ist das Verstärkungsblech dann positioniert und wird im Anschluss daran verschweißt. Dies hat sich wiederum als vorteilig erwiesen, da die dadurch beim Schweißen auftretenden Verzüge zu vernachlässigen sind und die Verbundlenkerachse somit in einem weitestgehend spannungsfreien Zustand auch hinsichtlich des Verstärkungsbleches bereitgestellt werden kann.

Weitere Vorteile, Merkmale, Eigenschaften, Aspekte der vorliegenden Erfindung sind Gegenstand der nachfolgenden Beschreibung. Bevorzugte Ausgestaltungsvarianten werden in schematischen Figuren dargestellt. Diese dienen dem einfacheren Verständnis der Erfindung. Es zeigen
- Figur 1: eine perspektivische Ansicht von unten auf eine Verbundlenkerachse,
- Figur 2: eine vergrößerte perspektivische Teilansicht auf ein Torsionsrohr mit eingesetztem Verstärkungsblech,
- Figur 3: eine Längsschnittansicht durch Figur 2,
- Figur 4: eine Querschnittsansicht durch Figur 2,
- Figur 5a bis c: ein Herstellungsverfahren des erfindungsgemäßen Kragendurchzuges.

In den Figuren werden für gleiche oder ähnliche Bauteile dieselben Bezugszeichen verwendet, auch wenn eine wiederholte Beschreibung aus Vereinfachungsgründen entfällt.

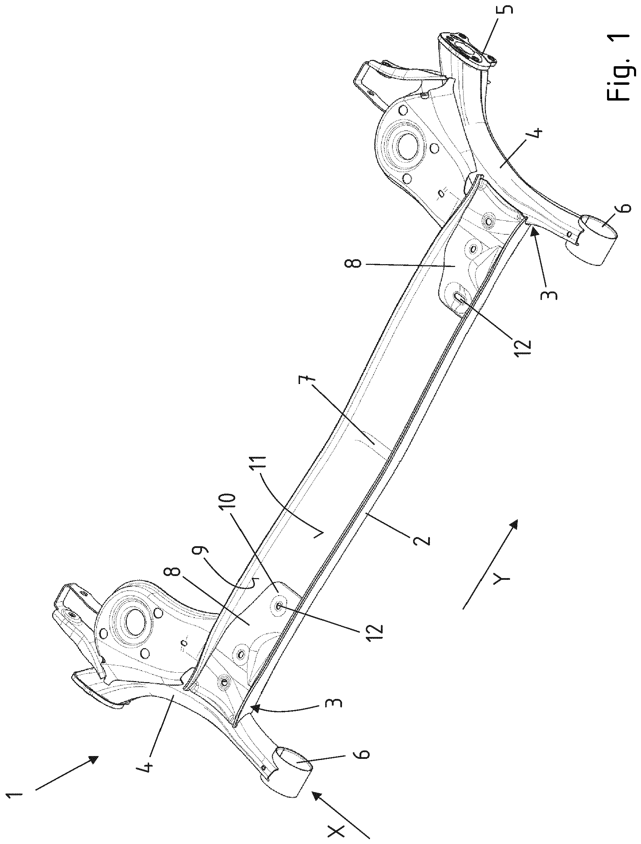

Figur 1 zeigt eine perspektivische Ansicht auf eine erfindungsgemäß hergestellte Verbundlenkerachse 1. Die Verbundlenkerachse 1 ist von unten dargestellt. Die Verbundlenkerachse weist ein Torsionsrohr 2 auf. Das Torsionsrohr erstreckt sind Kraftfahrzeugquerrichtung Y. Das Torsionsrohr 2 selbst ist in seinem Querschnitt U-förmig bzw. V-förmig ausgebildet. An den Enden 3 des Torsionsrohres 2 ist jeweils eine Längsschwinge 4 gekoppelt. Die Längsschwinge ist in Kraftfahrzeug-X-Richtung angeordnet. An wiederum den Enden der Längsschwinge sind Aufnahmen 5 für nicht näher dargestellte Radnaben bzw. Lageranbindungsstellen 6 zur Anbindung einer nicht näher dargestellten Kraftfahrzeugkarosserie angeordnet. Von den Enden 3 aus, sich in Richtung zu einer Mitte 7 erstreckend, sind Verstärkungsbleche 8 eingesetzt. Die Verstärkungsbleche 8 sind nicht näher dargestellt. An einer Innenmantelfläche 9 des Torsionsprofils 2 zumindest längenabschnittsweise verschweißt. Ein jeweiliges Ende 10 des Verstärkungsbleches 8 ist schmaler werdend ausgebildet und liegt bevorzugt in einem Nutgrund bzw. Talgrund des Torsionsprofils 2, zumindest in diesem Abschnitt des Endes 10, flächig an. Hier ist eine Verbindung 12 erfindungsgemäß ausgebildet als Kragendurchzug 14. Diese ist auf die Bildebene bezogen links als rundes Loch und auf die Bildebene bezogen rechts als Langloch schematisch angedeutet.

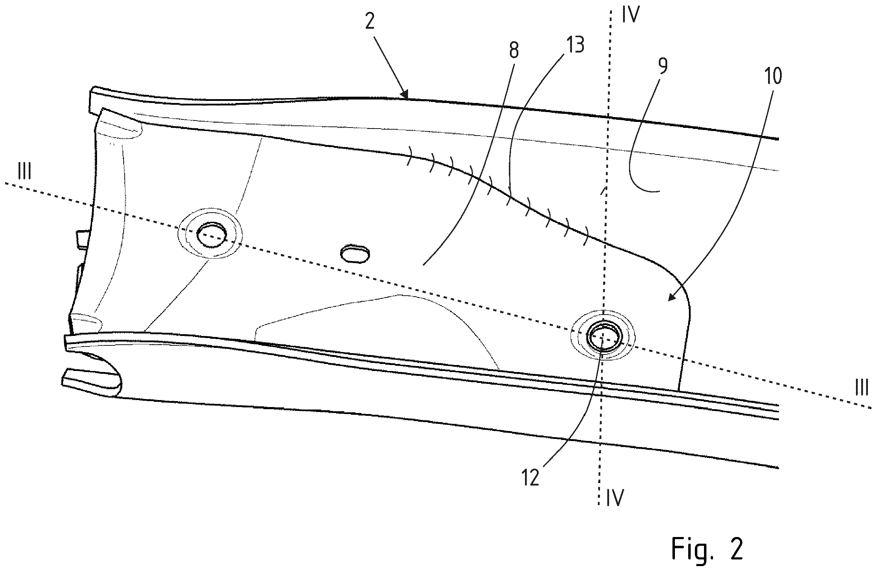

Figur 2 zeigt eine vergrößerte Ansicht. Das Verstärkungsblech 8 ist, zumindest längenabschnittsweise mittels einer thermischen Fügenaht an die Innenmantelfläche 9 des Torsionsrohres 2 verschweißt. Am Ende 10 des Verstärkungsbleches 8 oder im Bereich des Endes 10 ist dies als Verbindung 12 mit einem Kragen 14 formschlüssig und bevorzugt kraftschlüssig mit dem Torsionsrohr 2 gekoppelt.

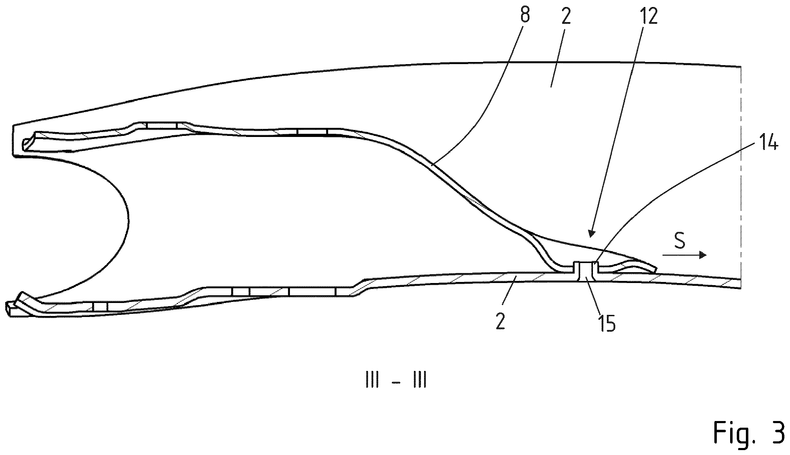

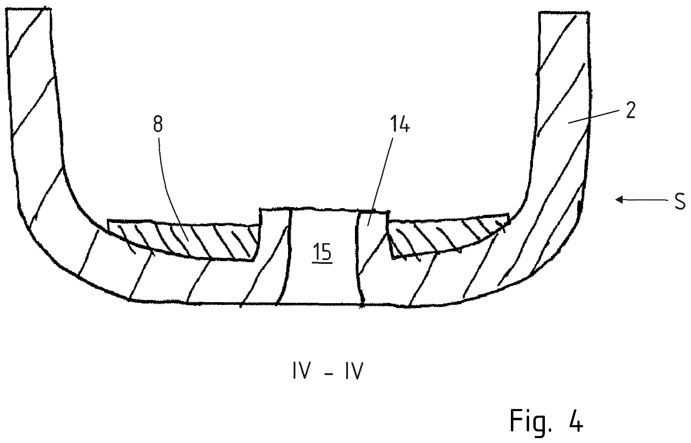

Eine Längsschnittansicht ist in Figur 3 dargestellt, eine Querschnittsansicht in Figur 4. Die Wandstärke des Torsionsprofils 3 und 4 als durchgezogenen Kragen bzw. Kragendurchzug 14 ausgebildet und durchgreift dabei eine Ausnehmung 15 des Verstärkungsbleches 8. Auftretende Schubkräfte, die in der x-y-Richtung liegen, können somit aufgrund des Kragendurchzuges 14 bestmöglich aufgenommen werden.

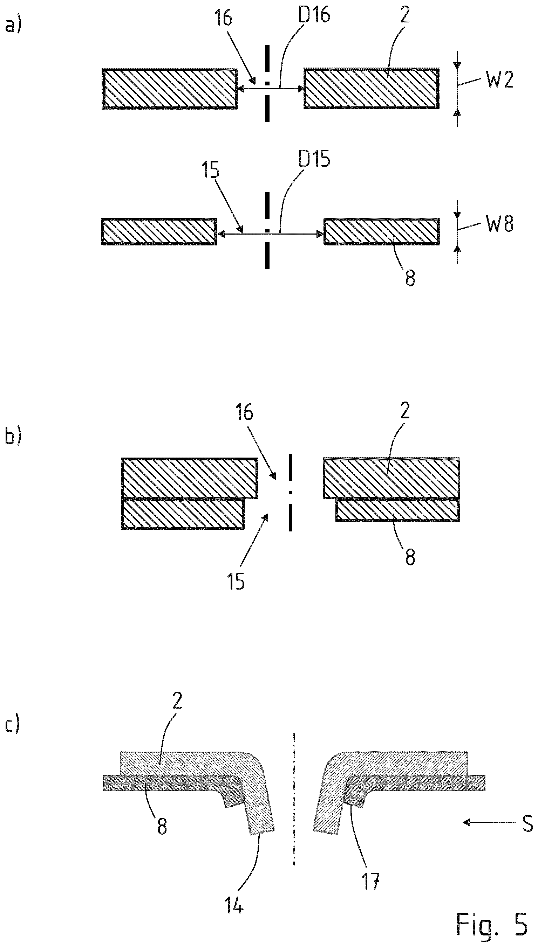

Figur 5a, b und c zeigen ein Herstellungsverfahren. Zunächst wird das Torsionsprofil 2 bereitgestellt, welches eine Wandstärke W2 aufweist, die mindestens 1,5fach größer ist als die Wandstärke W8 des Verstärkungsbleches 8. Eine Ausnehmung 16 des Torsionsprofils 2 zur Herstellung des späteren Kragens 16 weist einen Durchmesser D16 auf, der kleiner ist als der Durchmesser D15 der Ausnehmung 15 des Verstärkungsbleches 8.

Gemäß dem Fertigungsschritt in Figur 5b dargestellt, liegen dann Torsionsprofil 2 und Verstärkungsblech 8 im zu fügenden Bereich aneinander an. Ein nicht näher dargestellter Stempel wird eingefahren, so dass der Kragendurchzug 14 des Torsionsprofiles 2 das Verstärkungsblech 8 durchgreift. Das Verstärkungsblech 8 kann, muss jedoch nicht, wie in Figur 5c dargestellt, ebenfalls einen Kragen 14 aufweisen. Zur Aufnahme und Übertragung der dargestellten Schubkräfte S ist der Kragen 14 des Torsionsprofils 2 ausreichend. Eine aufgrund einer Presspassung entstehender Reibschluss ist jedoch durch den Kragen 17 des Verstärkungsbleches 8 erhöht. Besonders vorteilig ist, dass eine jeweilige Ausnehmung vor Herstellung des Kragendurchzuges vorhanden ist, so dass die auftretenden Umformkräfte gering sind.

### Bezugszeichen:

- 1 -: Verbundlenker
- 2 -: Torsionsrohr
- 3 -: Ende zu 2
- 4 -: Längsschwinge
- 5 -: Aufnehmen
- 6 -: Anbindungsöffnung
- 7 -: Mitte zu 2
- 8 -: Verstärkungsblech
- 9 -: Innenmantelfläche zu 2
- 10 -: Ende zu 8
- 11 -: Nutgrund
- 12 -: Verbindung
- 13 -: thermische Fügenaht
- 14 -: Kragendurchzug/Kragen
- 15 -: Ausnehmung zu 8
- 16 -: Ausnehmung zu 2
- 17 -: Kragen zu 8
- S -: Schubkraft
- X -: Kraftfahrzeuglängsrichtung
- Y -: Kraftfahrzeugquerrichtung
- W2 -: Wandstärke zu 2
- W8 -: Wandstärke zu 8
- D15 -: Durchmesser zu 15
- D16 -: Durchmesser zu 16

## Patentansprüche

1. Verbundlenkerachse (1) für ein Kraftfahrzeug, aufweisend ein Torsionsrohr (2) sowie an den Enden (3) des Torsionsrohres (2) gekoppelten Längsschwingen (4), wobei das Torsionsrohr (2) in seinem Querschnitt zumindest abschnittsweise als halboffenes Profil ausgebildet ist und in dem Torsionsrohr (2) ein Verstärkungsblech (8) eingesetzt und gekoppelt ist, **dadurch gekennzeichnet, dass** das Verstärkungsblech (8) über einen Kragendurchzug (14) mit dem Torsionsrohr (2) formschlüssig gekoppelt ist, wobei der Kragendurchzug (14) an dem Torsionsrohr (2) ausgebildet ist und das Verstärkungsblech (8) durchgreift.

2. Verbundlenkerachse (1) nach Anspruch 1, **dadurch gekennzeichnet, dass** das Torsionsprofil (2) einlagig ausgebildet ist und insbesondere in seinem Querschnitt U-förmig oder V-förmig ausgebildet ist.

3. Verbundlenkerachse (1) nach Anspruch 1 oder 2, **dadurch gekennzeichnet, dass** das Verstärkungsblech (8) im Bereich eines Endes (3) des Torsionsprofils (2) eingesetzt ist und in Richtung zu einer Mitte (7) des Torsionsprofils (2) orientiert zeigt, wobei das Verstärkungsblech (8) sich über einen Bereich des Torsionsprofils (2) in Längsrichtung von 2 bis 30%, insbesondere von 5 bis 20%, bevorzugt von 10 bis 20% der Gesamtlänge erstreckt.

4. Verbundlenkerachse (1) nach einem der vorgenannten Ansprüche, **dadurch gekennzeichnet, dass** das Verstärkungsblech (8) in Richtung zur Mitte (7) des Torsionsprofils (2) schmaler werdend ausgebildet ist.

5. Verbundlenkerachse (1) nach einem der vorgenannten Ansprüche, **dadurch gekennzeichnet, dass** das Verstärkungsblech (8) an einem zur Mitte (7) des Torsionsprofils (2) gerichteten Ende (3) an einer Innenmantelfläche (9) des Torsionsprofils (2) anliegt.

6. Verbundlenkerachse (1) nach einem der vorgenannten Ansprüche, **dadurch gekennzeichnet, dass** das Verstärkungsblech (8) an der Längsschwinge (4) und/oder an seinen Seiten mit der Innenmantelfläche (9) des Torsionsprofils (2) zumindest abschnittsweise verschweißt ist.

7. Verbundlenkerachse (1) nach einem der vorgenannten Ansprüche, **dadurch gekennzeichnet, dass** der Kragendurchzug (14) als reibschlüssige Koppelung ausgebildet ist.

8. Verbundlenkerachse (1) nach einem der vorgenannten Ansprüche, **dadurch gekennzeichnet, dass** die Wandstärke (W16) des Kragens (14) mindestens 1,5 mal größer ist, als die Wandstärke (W15) des Verstärkungsbleches (8).

9. Verbundlenkerachse (1) nach einem der vorgenannten Ansprüche, **dadurch gekennzeichnet, dass** an dem Verstärkungsblech (8) auch ein Kragen (17) ausgebildet ist.

10. Verbundlenkerachse (1) nach einem der vorgenannten Ansprüche, **dadurch gekennzeichnet, dass** der durchgezogene Kragen (14) an seiner Rückseite verprägt ist.

11. Verbundlenkerachse (1) nach einem der vorgenannten Ansprüche, **dadurch gekennzeichnet, dass** der Kragen (14) über eine Höhe der Wandstärke des Verstärkungsbleches an der Ausnehmung (15) des Verstärkungsbleches (8) von mindestens 50% anliegt.

12. Verfahren zur Herstellung einer Verbundlenkerachse mit mindestens den Merkmalen von Anspruch 1, **gekennzeichnet, durch** folgende Schritte:
- Bereitstellen eines Torsionsrohres (2) mit einer Ausnehmung (16) im Bereich des herzustellenden Kragens (14)
- Einsetzen eines Verstärkungsbleches (8) und Herstellen eines Kragendurchzuges (14) durch die Ausnehmung (15), wobei der Kragen (14) das Verstärkungsblech (8) mit durchgreift und optional an dem Verstärkungsblech (8) ein Kragen (17) mit ausgebildet wird, wobei der Kragen (14) des Torsionsprofils eine Ausnehmung (15) des Verstärkungsbleches (8) aufweitet, dergestalt, dass eine reibschlüssige Verbindung hergestellt wird.

13. Verfahren nach Anspruch 12, **dadurch gekennzeichnet, dass** der Kragen (14) an dem Torsionsprofil (2) vorgeformt ist, dergestalt, dass der vorgeformte Kragen (14) als Positionierungshilfe des Verstärkungsbleches (8) genutzt wird.

14. Verfahren nach Anspruch 12 oder 13, **dadurch gekennzeichnet, dass** die Ausnehmung (16) des Torsionsprofils (2) einen kleineren Durchmesser (D16) aufweist, in Relation zu der Ausnehmung (15) des Verstärkungsbleches.

15. Verfahren nach einem der Ansprüche 12 bis 14, **dadurch gekennzeichnet, dass** der durchgezogene Kragen (14) auf der Rückseite verprägt wird.

## Claims

1. Torsion beam axle (1) for a motor vehicle, having a torque tube (2) and longitudinal rocker (4) coupled at the ends (3) of the torsion tube (2), wherein the torsion tube (2) is formed in its cross-section at least in some portions as a semi-open profile and in the torsion tube (2) a reinforcement plate (8) is set in and coupled, **characterised in that** the reinforcement plate (8) is form-fittingly coupled with the torsion tube (2) via a collar passage (14), wherein the collar passage (14) is formed on the torsion tube (2) and engages through the reinforcement plate (8).

2. Torsion beam axle (1) according to claim 1, **characterised in that** the torsion profile (2) is single-layer in design and in particular is U-shaped or V-shaped in its cross-section.

3. Torsion beam axle (1) according to claim 1 or 2, **characterised in that** the reinforcement plate (8) is set in the region of an end (3) of the torsion profile (2) and points in a manner oriented in the direction towards a centre (7) of the torsion profile (2), wherein the reinforcement plate (8) extends in longitudinal direction across a region of the torsion profile (2) from 2 to 30%, in particular from 5 to 20%, preferably from 10 to 20% of the total length.

4. Torsion beam axle (1) according to any of the preceding claims, **characterised in that** the reinforcement plate (8) is formed so as to become narrower in the direction towards the centre (7) of the torsion profile (2).

5. Torsion beam axle (1) according to any of the preceding claims, **characterised in that** the reinforcement plate (8) rests on an inner jacket surface (9) of the torsion profile (2) at an end (3) directed to the centre (7) of the torsion profile (2).

6. Torsion beam axle (1) according to any of the preceding claims, **characterised in that** the reinforcement plate (8) is welded at the longitudinal rocker (4) and/or at its sides to the inner jacket surface (9) of the torsion profile (2), at least in some portions.

7. Torsion beam axle (1) according to any of the preceding claims, **characterised in that** the collar passage (14) is designed as a friction-fitting coupling.

8. Torsion beam axle (1) according to any of the preceding claims, **characterised in that** the wall thickness (W16) of the collar (14) is at least 1.5 times greater than the wall thickness (W15) of the reinforcement plate (8).

9. Torsion beam axle (1) according to any of the preceding claims, **characterised in that** also a collar (17) is formed on the reinforcement plate (8).

10. Torsion beam axle (1) according to any of the preceding claims, **characterised in that** the continuous collar (14) is stamped on its rear side.

11. Torsion beam axle (1) according to any of the preceding claims, **characterised in that** the collar (14) rests on the cutout (15) of the reinforcement plate (8) over a height of the wall thickness of the reinforcement plate by at least 50%.

12. Method for producing a torsion beam axle having at least the characteristics of claim 1, **characterised by** the following steps:
- providing a torsion tube (2) having a cutout (16) in the region of the collar (14) to be produced
- setting in a reinforcement plate (8) and producing a collar passage (14) through the cutout (15), wherein the collar (14) also passes through the reinforcement plate (8) and optionally a collar (17) is also formed on the reinforcement plate (8), wherein the collar (14) of the torsion profile flares a cutout (15) of the reinforcement plate (8) such that a friction-fitting connection is produced.

13. Method according to claim 12, **characterised in that** the collar (14) is preformed on the torsion profile (2) such that the preformed collar (14) is used as a positioning aid of the reinforcement plate (8).

14. Method according to claim 12 or 13, **characterised in that** the cutout (16) of the torsion profile (2) has a smaller diameter (D16) in relation to the cutout (15) of the reinforcement plate.

15. Method according to any of claims 12 to 14, **characterised in that** the continuous collar (14) is stamped on the rear side.

## Revendications

1. Essieu à traverse déformable (1) pour un véhicule automobile, présentant un tube de torsion (2) ainsi que des bielles oscillantes longitudinales (4) couplées aux extrémités (3) du tube de torsion (2), dans lequel le tube de torsion (2) est formé dans sa section transversale au moins par sections comme un profil semi-ouvert, et une tôle de renforcement (8) est insérée et couplée dans le tube de torsion (2), **caractérisé en ce que** la tôle de renforcement (8) est couplée par complémentarité de formes au tube de torsion (2) par le biais d'un passage de collerette (14), dans lequel le passage de collerette (14) est réalisé au niveau du tube de torsion (2) et traverse la tôle de renforcement (8).

2. Essieu à traverse déformable (1) selon la revendication 1, **caractérisé en ce que** le profil de torsion (2) est réalisé en une couche et est réalisé en particulier en forme de U ou en forme de V dans sa section transversale.

3. Essieu à traverse déformable (1) selon la revendication 1 ou 2, **caractérisé en ce que** la tôle de renforcement (8) est insérée dans la zone d'une extrémité (3) du profil de torsion (2) et pointe de manière orientée en direction d'un centre (7) du profil de torsion (2), dans lequel la tôle de renforcement (8) s'étend dans le sens longitudinal à travers une zone du profil de torsion (2) de 2 à 30 %, en particulier de 5 à 20 %, de préférence de 10 à 20 % de la longueur entière.

4. Essieu à traverse déformable (1) selon l'une quelconque des revendications précédentes, **caractérisé en ce que** la tôle de renforcement (8) est réalisée de manière à devenir plus étroite en direction du centre (7) du profil de torsion (2).

5. Essieu à traverse déformable (1) selon l'une quelconque des revendications précédentes, **caractérisé en ce que** la tôle de renforcement (8) repose à une extrémité (3) dirigée vers le centre (7) du profil de torsion (2) contre une surface d'enveloppe intérieure (9) du profil de torsion (2).

6. Essieu à traverse déformable (1) selon l'une quelconque des revendications précédentes, **caractérisé en ce que** la tôle de renforcement (8) est soudée au moins par sections au niveau de la bielle oscillante longitudinale (4) et/ou au niveau de ses côtés avec la surface d'enveloppe intérieure (9) du profil de torsion (2).

7. Essieu à traverse déformable (1) selon l'une quelconque des revendications précédentes, **caractérisé en ce que** le passage de collerette (14) est réalisé comme couplage par friction.

8. Essieu à traverse déformable (1) selon l'une quelconque des revendications précédentes, **caractérisé en ce que** l'épaisseur de paroi (W16) du collerette (14) est supérieure d'au moins 1,5 fois à l'épaisseur de paroi (W15) de la tôle de renforcement (8).

9. Essieu à traverse déformable (1) selon l'une quelconque des revendications précédentes, **caractérisé en ce qu'**une collerette (17) est aussi formée au niveau de la tôle de renforcement (8).

10. Essieu à traverse déformable (1) selon l'une quelconque des revendications précédentes, **caractérisé en ce que** la collerette (14) continue est estampée au niveau de son côté arrière.

11. Essieu à traverse déformable (1) selon l'une quelconque des revendications précédentes, **caractérisé en ce que** la collerette (14) repose sur une hauteur de l'épaisseur de paroi de la tôle de renforcement contre l'évidement (15) de la tôle de renforcement (8) d'au moins 50 %.

12. Procédé de fabrication d'un essieu à traverse déformable avec au moins les caractéristiques de la revendication 1, **caractérisé par** les étapes suivantes :
- la fourniture d'un tube de torsion (2) avec un évidement (16) dans la zone de la collerette (14) à fabriquer
- l'insertion d'une tôle de renforcement (8) et la fabrication d'un passage de collerette (14) à travers l'évidement (15), dans lequel la collerette (14) traverse aussi la tôle de renforcement (8) et en option une collerette (17) est aussi formée au niveau de la tôle de renforcement (8), dans lequel la collerette (14) du profil de torsion élargit un évidement (15) de la tôle de renforcement (8) de telle manière qu'une liaison par friction soit établie.

13. Procédé selon la revendication 12, **caractérisé en ce que** la collerette (14) est préformée au niveau du profil de torsion (2) de telle manière que la collerette (14) préformée soit utilisée comme aide au positionnement de la tôle de renforcement (8).

14. Procédé selon la revendication 12 ou 13, **caractérisé en ce que** l'évidement (16) du profil de torsion (2) présente un diamètre plus petit (D16) en relation avec l'évidement (15) de la tôle de renforcement.

15. Procédé selon l'une quelconque des revendications 12 à 14, **caractérisé en ce que** la collerette (14) continue est estampée sur le côté arrière.
